# EUROPEAN PATENT APPLICATION

(11) **EP 4 697 628 A1**
(43) Date of publication of application: **18.02.2026**
(21) Application number: 23932378.5
(22) Date of filing: 10.04.2023
(51) Int. Cl.: H04L 1/00, H04W 52/18

(54) **INFORMATION PROCESSING METHOD AND APPARATUS, COMMUNICATION DEVICE, AND STORAGE MEDIUM**

(71) Applicant: Beijing Xiaomi Mobile Software Co., Ltd., Beijing 100085 (CN)
(72) Inventor: GUO, Shengxiang, Beijing 100085 (CN)
(74) Representative: Dehns Germany Partnerschaft mbB
(86) International application number: PCT/CN2023/087425
(87) International publication number: WO 2024/212078

(57) **Abstract**

Embodiments of the present disclosure provide an information processing method and apparatus, a communication device, and a storage medium. The information processing method executed by a terminal comprises : sending transmit power information to a network device, wherein the transmit power information is used for determining a transmit power difference between the transmit power of a target antenna among diversity antennas of the terminal and the transmit power of a main antenna, and the transmit power difference is used by the network device to perform, when the terminal uses the target antenna to transmit a sounding reference signal (SRS), deviation compensation for SRS channel estimation related to the target antenna.

## Description

### TECHNICAL FIELD

The present disclosure relates to the field of wireless communication technologies but is not limited to the field of wireless communication technologies, and in particular to an information processing method and apparatus, a communication device, and a storage medium.

### BACKGROUND

To facilitate the base station to directly evaluate the channel quality of the downlink channel, SRS (Sounding Reference Signal) antenna switching was introduced in the 5th generation mobile communication technology (5G) communication system.

### SUMMARY

Embodiments of the present disclosure provide an information processing method and apparatus, a communication device, and a storage medium.

According to a first aspect of the embodiments of the present disclosure, there is provided an information processing method, performed by a terminal, including:
sending transmit power information to a network device; where the transmit power information is configured to determine a transmit power difference between a transmit power of a target antenna in diversity antennas of the terminal and a transmit power of a primary antenna of the terminal; and the transmit power difference is used by the network device to compensate for a deviation in a channel estimation for a sounding reference signal SRS associated with the target antenna when the terminal transmits the SRS using the target antenna.

According to a second aspect of the embodiments of the present disclosure, there is provided an information processing method, performed by a network device, including:
receiving transmit power information sent by a terminal; where the transmit power information is configured to determine a transmit power difference between a transmit power of a target antenna in diversity antennas of the terminal and a transmit power of a primary antenna of the terminal; and the transmit power difference is used by the network device to compensate for a deviation in a channel estimation for a sounding reference signal SRS associated with the target antenna when the terminal transmits the SRS using the target antenna..

According to a third aspect of the embodiments of the present disclosure, there is provided an information processing device, applied to a terminal, including:
a sending module configured to send transmit power information to a network device; where the transmit power information is configured to determine a transmit power difference between a transmit power of a target antenna in diversity antennas of the terminal and a transmit power of a primary antenna of the terminal; and the transmit power difference is used by the network device to compensate for a deviation in a channel estimation for a sounding reference signal SRS associated with the target antenna when the terminal transmits the SRS using the target antenna.

According to a fourth aspect of the embodiments of the present disclosure, there is provided an information processing device, applied to a network device, including:
a receiving module configured to receive transmit power information sent by a terminal; where the transmit power information is configured to determine a transmit power difference between a transmit power of a target antenna in diversity antennas of the terminal and a transmit power of a primary antenna of the terminal; where the transmit power difference is used by the network device to compensate for a deviation in a channel estimation for a sounding reference signal SRS associated with the target antenna when the terminal transmits the SRS using the target antenna.

According to a fifth aspect of the embodiments of the present disclosure, there is provided communication system, including:
a terminal configured to perform the information processing method according to the above first aspect; and
a network device configured to perform the information processing method according to the above second aspect.

According to a sixth aspect of the embodiments of the present disclosure, there is provided a communication device, including:
a processor; and
a memory for storing instructions executable by the processor;
where the processor is configured to, when executing the executable instructions, perform the information processing method according to the above first aspect or the second aspect.

According to a seventh aspect of the embodiments of the present disclosure, there is provided a computer storage medium, where the computer storage medium stores a computer executable program, and when the executable program is executed by a processor, the processor performs the information processing method according to the above first aspect or the second aspect.

The technical solution provided by the embodiments of the present disclosure involves a terminal sending transmit power information to a network device, allowing the network device to determine the transmit power difference between the target antenna in diversity antennas and the primary antenna of the terminal based on the transmit power information. When the terminal transmits an SRS using the target antenna, the network device compensates for a deviation in a channel estimation for SRS associated with the target antenna based on the transmit power difference. This reduces the deviation of the channel estimation caused by the additional insert loss of the target antenna transmitting the SRS signal compared to the primary antenna, thereby improving the accuracy of the downlink channel estimation by the network device for the target antenna and enhancing SRS channel estimation performance.

It should be understood that the above general description and the detailed descriptions that follow are merely exemplary and explanatory and do not limit the embodiments of the present disclosure.

### BRIEF DESCRIPTION OF THE DRAWINGS

The accompanying drawings are incorporated into and constitute a part of this description, illustrate embodiments consistent with the present disclosure, and together with the description, serve to explain the principles of the embodiments of the present disclosure.
FIG. 1 is a schematic diagram of a structure of a wireless communication system according to an example embodiment;
FIG. 2 is a schematic diagram of a structure of a 1T4R antenna switching radio frequency device according to an example embodiment;
FIG. 3 is a schematic diagram of a flow of an information processing method according to an example embodiment;
FIG. 4 is a schematic diagram of a flow of an information processing method according to an example embodiment;
FIG. 5 is a schematic diagram of a flow of an information processing method according to an example embodiment;
FIG. 6 is a schematic diagram of a flow of an information processing method according to an example embodiment;
FIG. 7 is a schematic diagram of a flow of an information processing method according to an example embodiment;
FIG. 8 is a schematic diagram of a flow of an information processing method according to an example embodiment;
FIG. 9 is a schematic diagram of a flow of an information processing method according to an example embodiment;
FIG. 10 is a schematic diagram of a flow of an information processing method according to an example embodiment;
FIG. 11 is a schematic diagram of a structure of an information processing device according to an example embodiment;
FIG. 12 is a schematic diagram of a structure of an information processing device according to an example embodiment;
FIG. 13 is a schematic diagram of a structure of a UE according to an example embodiment;
FIG. 14 is a schematic diagram of a structure of a communication device according to an example embodiment.

### DETAILED DESCRIPTION

Example embodiments will be described in detail herein, with examples illustrated in the accompanying drawings. When the following description refers to the drawings, identical numerals in different drawings represent identical or similar elements, unless otherwise indicated. The embodiments described in the following example embodiments do not represent all embodiments consistent with the present disclosure. Rather, they are merely examples of apparatuses and methods consistent with aspects of the present disclosure.

The terminology used in the present disclosure is for the purpose of describing specific embodiments only and is not intended to be limiting of the present disclosure. As used herein, the singular forms "a", "an", "said" and "the" are intended to include the plural forms, unless the context clearly indicates otherwise. It should also be understood that the term "and/or" as used herein refers to and encompasses any and all possible combinations of one or more of the associated listed items.

It should be understood that although the present disclosure may employ the terms "first", "second", and "third", etc., to describe various information, such information should not be limited to these terms. These terms are used solely to distinguish information of the same type from one another. For example, first information could be referred to as second information, and similarly, second information could be referred to as first information, without departing from the scope of the present disclosure. Depending on the context, the term "if" as used herein can be interpreted as "upon", "when", or "in response to a determining".

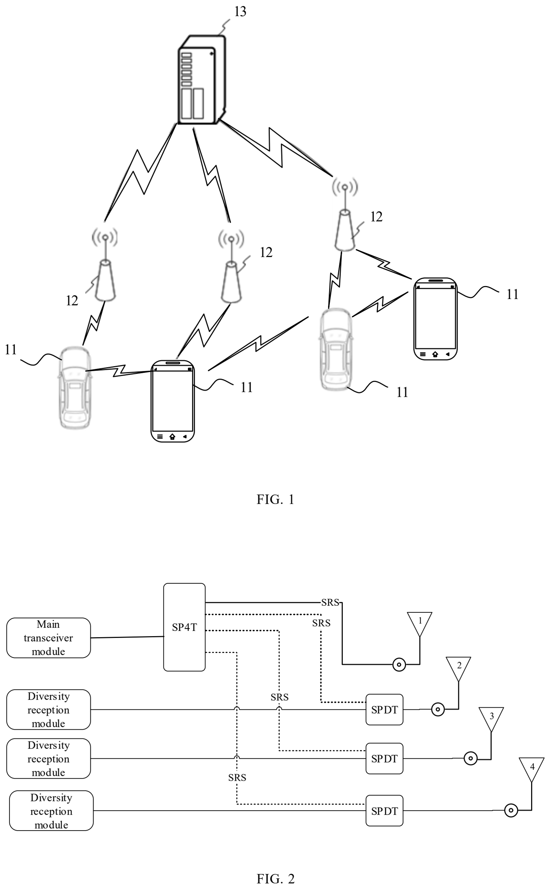

FIG. 1 is a schematic diagram illustrating a structure of a wireless communication system according to an example embodiment. To facilitate understanding of the embodiments of the present disclosure, the wireless communication system shown in FIG. 1 is first used as an example to describe in detail a wireless communication system applicable to the embodiments of the present disclosure. It should be noted that the solutions in the embodiments of the present disclosure can also be applied to other wireless communication systems, and the corresponding names can be replaced with the names of corresponding functions in other wireless communication systems.

As shown in FIG. 1, the wireless communication system is a communication system based on cellular mobile communication technology. The wireless communication system may include several user equipment 11, several access network devices 12, and a network management device 13.

The user equipment 11 may be a device that provides voice and/or data connectivity to a user. The user equipment 11 may communicate with one or more core networks via a radio access network (RAN). The user equipment 11 may be an Internet of Things (IoT) user equipment, such as a sensor device, a mobile phone (or a "cellular" phone), and a computer with an IoT user equipment. For example, the user equipment 11 may be fixed, portable, pocket-sized, handheld, built into a computer, or mounted in a vehicle. For example, the user equipment 11 may be a station (STA), a subscriber unit, a subscriber station, a mobile station, a mobile, a remote station, an access point, a remote terminal, an access terminal, a user terminal, a user agent, a user device, or a user equipment. Alternatively, the user equipment 11 may be a wearable device, a virtual reality (VR) device, an augmented reality (AR) device, or a VR/AR hybrid headset. Alternatively, the user equipment 11 may be a device on an unmanned aerial vehicle. Alternatively, the user equipment 11 may be an in-vehicle device, such as an onboard computer with wireless communication function or a wireless user device connected to an external onboard computer. Alternatively, the user equipment 11 may be a roadside device, such as a streetlight, traffic light, or other roadside device with wireless communication function.

The access network device 12 may be a network-side device in a wireless communication system. The wireless communication system may be a 4th generation mobile communication technology (4G) system, also known as a Long Term Evolution (LTE) system; or a 5G system, also known as a new radio system or a 5G New Radio (NR) system. Alternatively, the wireless communication system may be a next-generation system after the 5G system. The access network in the 5G system may be referred to as a new generation-radio access network (NG-RAN).

The access network device 12 may be an evolved base station (eNB) used in a 4G system. Alternatively, the access network device 12 may be a base station (gNB) using a centralized distributed architecture in a 5G system. When the access network device 12 uses a centralized distributed architecture, it typically includes a central unit (CU) and at least two distributed units (DUs). The central unit is provided with a protocol stack of a Packet Data Convergence Protocol (PDCP) layer, a Radio Link Control (RLC) layer, and a Medium Access Control (MAC) layer. The distributed unit is provided with a protocol stack of a Physical (PHY) layer. The embodiments of present disclosure do not limit the specific implementation of the access network device 12.

A wireless connection can be established between the access network device 12 and the user equipment 11 via a wireless air interface. In various implementations, the wireless air interface can be based on the fourth-generation mobile communication network technology (4G) standard; or based on the fifth-generation mobile communication network technology (5G) standard, such as a new radio; or based on a later-generation mobile communication network technology standard of 5G.

The access network device 12 can be located in a communication system integrated with a satellite communication system and can provide connection services for the satellite, enabling the satellite to be connected to the core network. For example, the access network device 12 may be an access network device with satellite gateway function in a communication system, such as a gateway device, a ground station device, or a non-terrestrial network gateway (NTN-Gateway)/ satellite gateway, etc.

In some examples, the user equipment 11 may also establish E2E (End-to-End) or D2D (Device-to-Device) connections. Examples include V2V (vehicle-to-vehicle), V2I (vehicle-to-infrastructure), and V2P (vehicle-to-pedestrian) communications, etc. within vehicle-to-everything (V2X) communications.

In one embodiment, the wireless communication system may further include a network management device 13. Several access network devices 12 are respectively connected to the network management device 13.

In one embodiment, the network management device 13 may be a core network device in a wireless communication system. For example, the network management device 13 may be a Mobility Management Entity (MME) in an Evolved Packet Core (EPC). Alternatively, the core network device may be a Serving GateWay (SGW), a Public Data Network GateWay (PGW), a Policy and Charging Rules Function (PCRF), or a Home Subscriber Server (HSS). The present disclosure does not limit the implementation of the core network device 13.

In one embodiment, the network management device 13 may be an Access and Mobility Management Function (AMF), a Unified Data Management (UDM), a Session Management Function (SMF), a User Plane Function (UPF), or the like. The present disclosure does not limit the implementation of the network management device 13.

To facilitate downlink channel quality estimation on the network side (e.g., base stations), the 5G New Radio (NR) introduces the SRS antenna switching function. The SRS antenna switching function is used in time division duplexing (TDD) scenarios where the number of antennas (or referred to as "transmitting antennas") of the transmitter (Tx) of the terminal is smaller than the number of antennas (or referred to as "receiving antennas") of the receiver (Rx) of the terminal. Because the terminal has fewer transmitting antennas than receiving antennas, when the network device uses SRS to measure the downlink channel states corresponding to the receiving antennas, the terminal uses a small number of transmitting channels through antenna switching (also known as "antenna cycling") to connect to different antenna units (groups) in different transmit time slots to send SRSs corresponding to the receiving antennas to the network device. This allows the network device to estimate the channel states corresponding to all receiving antennas. The terminal sends the SRS by cycling through different antennas, the network device detects the SRS signal and, by leveraging channel reciprocity, obtains channel state information for all receiving antennas. This allows for direct estimation of the channel quality of the corresponding spectrum resources on the downlink channel, thus avoiding the latency and poor accuracy associated with indirect feedback from the terminal. However, the effectiveness of this function also depends on the capability of the terminal.

In some embodiments, when the SRS signal is transmitted by cycling through different antennas, the signal insert loss (i.e., the insert loss along the transmission path) varies between antennas. This variation in signal insert loss is due to the different SRS signal transmission paths used by antennas.

FIG. 2 shows a structure of a 1T4R (1 transmit, 4 receive) antenna switching RF device. As shown in FIG. 2, the device includes a main transceiver module, three diversity reception modules, a single-pole four-throw (ST4P) switch, three single-pole double-throw (SPDT) switches, a primary antenna (or "primary antenna") 1, a diversity antenna 2, a diversity antenna 3, and a diversity antenna 4. The main transceiver module is connected to primary antenna 1 and three SPDT switches respectively via the ST4P switch. Different diversity reception modules are connected to different diversity antennas via different SPDT switches. Compared to the primary antenna 1, the diversity antennas 2, 3, and 4 must consider additional insert loss of SPDT and additional line loss when transmitting SRS signals. This means that each diversity antenna experiences additional insert loss in the SRS transmission path compared to the primary antenna.

In the relevant protocols of the 3rd Generation Partnership Project (3GPP) specifications, this additional insert loss is represented by ΔT_{RxSRS}. For a frequency band below 4.4 GHz, the ΔT_{RxSRS} value is defined as 3 dB; for frequency bands greater than or equal to 4.4 GHz, the ΔT_{RxSRS} value is defined as 4.5 dB. This value is calculated by comparing the additional insert loss across the antennas and taking the maximum value. The ΔT_{RxSRS} value directly affects the configurable maximum output power (PCMAX) of the transmitted SRS signal. PCMAX is also known as the "configured maximum output power." Furthermore, because the network lacks access to the insert loss information of the SRS antenna of the terminal during transmission, it cannot accurately assess the channel quality of the SRS antenna, thereby impacting downlink system performance. In particular, with the introduction of more diversity receive antennas, such as 8Rx (receive antennas), ΔT_{RxSRS} inevitably increases. This severely degrades the accuracy of the base station's direct estimation of the channel quality of the corresponding spectrum resources on the downlink channel, hindering the benefits of SRS antenna switching.

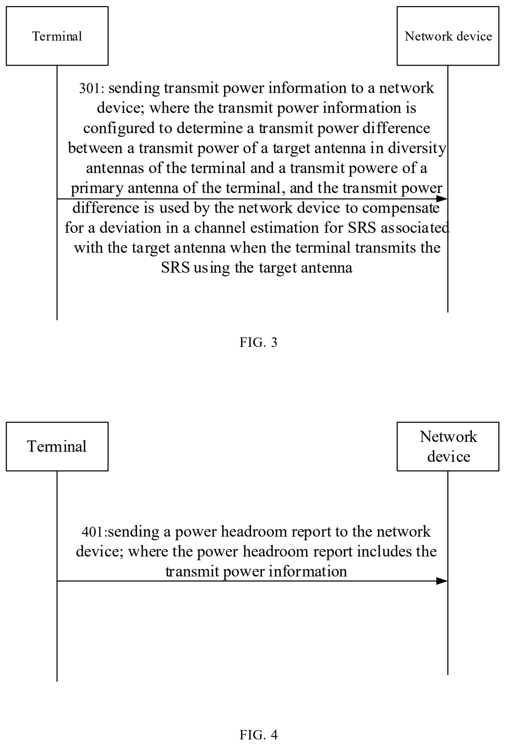

FIG. 3 is a flowchart illustrating an information processing method according to an example embodiment. The information processing method, as shown in FIG. 3, is performed by the terminal and may include the following:

Step 301: sending transmit power information to a network device; where the transmit power information is configured to determine a transmit power difference between a transmit power of a target antenna in diversity antennas of the terminal and a transmit power of a primary antenna of the terminal, and the transmit power difference is used by the network device to compensate for a deviation in a channel estimation for SRS associated with the target antenna when the terminal transmits the SRS using the target antenna.

In the present disclosure, on the context of the present disclosure, the information processing method may also be understood as a communication method.

In some examples, the network device may be a base station, for example, the network device may be a gNB or an eNB.

In some examples, the terminal may be various mobile or fixed terminals. For example, the terminal may be, but is not limited to, a mobile phone, a wearable device, an IoT device, etc.

The terminal includes multiple antennas, including a primary antenna and diversity antennas.

In the embodiments of the present disclosure, the antenna may also be replaced by: an antenna group, an antenna set, an antenna port, an antenna port group, an antenna port set, a beam, a beam set, an antenna array, an antenna port array, or an antenna panel, etc.

The terminal supports SRS antenna switching function. The terminal can utilize a small number of transmit channels through switches to connect to different antennas for SRS transmission in different transmit time slots, allowing the network device to obtain downlink channel information for different antennas by utilizing channel reciprocity.

In the embodiment, the terminal can send transmit power information to the network device, so that the network device can determine the transmit power difference between the primary antenna of the terminal and the target antenna transmitting the SRS signal of the terminal based on the received transmit power information, and compensate for a deviation in a channel estimation for SRS associated with the target antenna based on the transmit power difference.

The SRS channel estimation associated with the target antenna is configured to estimate the downlink channel of the antenna port mapped to the target antenna.

In some examples, the transmit power information includes at least the transmit power of the target antenna in the diversity antennas of the terminal.

In other examples, the transmit power information includes the transmit power of the diversity antennas and the transmit power of the primary antenna, with the diversity antennas including at least the target antenna.

In yet other examples, the transmit power information includes the transmit power difference between the transmit power of the target antenna and the transmit power of the primary antenna.

In some examples, when the transmit power of the target antenna includes the configured maximum output power of the target antenna, the transmit power difference includes the power difference between the configured maximum output power of the target antenna and the configured maximum output power of the primary antenna.

In some examples, when the transmit power of the target antenna includes the power headroom of the target antenna, the transmit power difference includes the power difference between the power headroom of the target antenna and the power headroom of the primary antenna.

In the present disclosure, the power headroom may also be referred to as "headroom power."

For example, the configured maximum output power of antenna i of the terminal indicates the maximum power allowed to be output by antenna i. Here, i is less than or equal to N, where N is the total number of antennas of the terminal.

The power headroom for antenna i of the terminal is the difference between the configured maximum output power of antenna i and the estimated uplink transmission power.

The estimated uplink transmission power may be, for example, one of the following: an estimated physical uplink shared channel (PUSCH) transmission power, a sum of an estimated physical uplink control channel (PUCCH) transmission power and PUSCH transmission power, or an estimated SRS transmission power.

In some examples, the transmit power difference between the transmit power of the target antenna and the transmit power of the primary antenna is used as a deviation compensation value for the SRS channel estimation associated with the target antenna. Alternatively, the transmit power difference between the transmit power of the target antenna and the transmit power of the primary antenna is configured to calculate the deviation compensation value for the SRS channel estimation associated with the target antenna.

In some examples, the target antenna and the primary antenna may both be a single antenna; or, they may both be antenna groups composed of multiple antennas.

In some examples, the terminal may send the transmit power information to the network device in response to an acquisition request from the network device. For example, the acquisition request of the network device may be sent to the terminal when the terminal accesses the network.

In an embodiment of the present disclosure, the terminal sends transmit power information to the network device, allowing the network device to determine the transmit power difference between the primary antenna of the terminal and the target antenna in the diversity antennas of the terminal based on the transmit power information. When the terminal transmits an SRS using the target antenna, the network device compensates for a deviation in a channel estimation for SRS associated with the target antenna based on the transmit power difference. This reduces the channel estimation deviation caused by the additional insert loss of the target antenna transmitting the SRS signal compared to the primary antenna, thereby improving the accuracy of the downlink channel estimation by the network device for the target antenna and enhancing SRS channel estimation performance.

In one embodiment, the transmit power difference between the transmit power of the target antenna and the transmit power of the primary antenna may include at least one of the following:
a power difference between the configured maximum output power of the target antenna and the configured maximum output power of the primary antenna;
a power difference between the power headroom of the target antenna and the power headroom of the primary antenna.

In the embodiment, since the insert loss information of the SRS transmission path of the target antenna can directly affect the transmit power at the configured maximum output power of the target antenna, the power difference between the configured maximum output power of the target antenna and the configured maximum output power of the primary antenna can directly reflect the additional insert loss of the target antenna compared to the primary antenna (i.e., the difference between the insert loss of the SRS transmission path of the target antenna and the insert loss of the SRS transmission path of the primary antenna).

In addition, the power headroom of the target antenna is related to the configured maximum output power of the target antenna. Therefore, the power difference between the power headroom of the target antenna and the power headroom of the primary antenna can indirectly reflect the additional insert loss of the target antenna compared to the primary antenna.

As a result, the network device can compensate for a deviation in the channel estimation for SRS associated with the target antenna based on the power difference between the configured maximum output power of the target antenna and the configured maximum output power of the primary antenna, and/or the power difference between the power headroom of the target antenna and the power headroom of the primary antenna. This can reduce the channel estimation deviation caused by the additional insert loss of the target antenna transmitting the SRS signal compared to the primary antenna, thereby improving the accuracy of the downlink channel estimation by the network device for the target antenna and enhancing SRS channel estimation performance.

In one embodiment, the transmit power information sent by the terminal to the network device includes transmit power information of the target antenna and transmit power information of the primary antenna.

In some examples, the transmit power information sent by the terminal to the network device includes at least one of the following:
the configured maximum output power of the target antenna and the configured maximum output power of the primary antenna;
the power headroom of the target antenna and the power headroom of the primary antenna.

In one embodiment, in a case where the transmit power information of the primary antenna has already been sent by the terminal to the network device, the transmit power information includes the transmit power information of the target antenna.

In some examples, the transmit power information of the primary antenna may be sent to the network device when the SRS antenna of the terminal switches from the primary antenna to a first antenna, where the first antenna may be a diversity antenna different from the target antenna among the diversity antennas of the terminal.

For example, when the SRS antenna of the terminal switches from the primary antenna to the first antenna, the transmit power information of the primary antenna and the transmit power information of the first antenna may be sent by the terminal to the network device.

In some examples, in a case where the terminal has sent the network device the configured maximum output power of the primary antenna, the transmit power information sent by the terminal to the network device includes the configured maximum output power of the target antenna.

In some examples, in a case where the terminal has sent the network device the power headroom of the primary antenna, the transmit power information sent by the terminal to the network device includes the power headroom of the target antenna.

In one embodiment, the transmit power information includes the transmit power difference between the transmit power of the target antenna and the transmit power of the primary antenna.

In some examples, the transmit power difference includes at least one of the following: the power difference between the configured maximum output power of the target antenna and the configured maximum output power of the primary antenna; or the power difference between the power headroom of the target antenna and the power headroom of the primary antenna.

In one embodiment, as shown in FIG. 4, in step 301, sending the transmit power information to the network device may include:

Step 401: sending a power headroom report to the network device; where the power headroom report includes the transmit power information.

In some examples, the power headroom report (PHR) sent by the terminal is carried in a Media Access Control (MAC) control element (CE).

In some examples, the PHR reporting format may be PHR type 3.

In some examples, the terminal sends the power headroom report based on an SRS antenna switching event.

As an example, the SRS antenna switching event may be a terminal-triggered SRS transmission by cycling. The terminal-triggered SRS transmission by cycling may be triggered when the terminal receives SRS configuration information sent by the network device.

For example, when the terminal triggers SRS transmission by cycling, the terminal may send a power headroom report containing transmit power information for each antenna of the terminal to the network device. Alternatively, when a terminal triggers SRS transmission by cycling, the terminal may send a power headroom report containing the transmit power difference between the transmit power of each diversity antenna of the terminal and the transmit power of the primary antenna to the network device.

As another example, the SRS antenna switching event may be a switching of the SRS antenna of the terminal. Here, the SRS antenna is an antenna from which the terminal transmits an SRS signal.

As an example, based on the SRS antenna switching event, the terminal sends a power headroom report when each antenna transmits an SRS.

For example, the SRS antenna switching may be that the SRS antenna is about to be switched to the target antenna or the SRS antenna has already been switched to the target antenna.

In some examples, the terminal sends a power headroom report based on downlink control information (DCI) sent by the network device. For example, the indication information carried in the DCI may indicate the uplink resource for the terminal to transmit a PHR. The uplink resource may be a time slot resource for the PHR.

In some examples, the terminal sends a power headroom report containing transmit power information to the network device in response to a request from the network device. For example, the request may be sent by the network device to the terminal when the terminal accesses the network.

In this embodiment, when reporting the power headroom report, the terminal may report transmit power information, such as the configured maximum output power of the target antenna and the configured maximum output power of the primary antenna, or the power headroom of the target antenna and the power headroom of the primary antenna. This allows the network device to determine the transmit power difference between the target antenna and the primary antenna, thereby compensating for the deviation in the channel estimation for SRS associated with the target antenna and improving the accuracy of the SRS channel estimation.

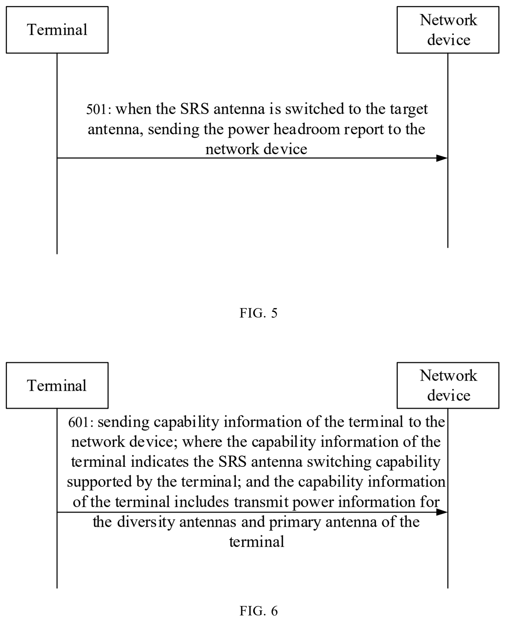

In one embodiment, as shown in FIG. 5, sending the power headroom report to the network device in step 401 may include:
Step 501: when the SRS antenna is switched to the target antenna, sending the power headroom report to the network device.

In some examples, when the SRS antenna is switched to the target antenna, the terminal sends the power headroom report on the antenna port mapped to the target antenna.

In some examples, switching the SRS antenna to the target antenna may include: the SRS antenna is about to be switched to the target antenna, or the SRS antenna has already been switched to the target antenna.

In other examples, to save network resources, the terminal may send the power headroom report to the network device based on a triggering condition for reporting the power headroom report when the SRS antenna is switched to the target antenna.

In some examples, the triggering condition for reporting the power headroom report may include at least one of the following:
a difference between the insert loss of the target antenna and the insert loss of the primary antenna is greater than a first threshold;
a difference between the transmit power of the target antenna and the transmit power of the primary antenna is greater than a second threshold;
a sum of a first difference and a second difference is greater than a third threshold, where the first difference is a difference between the insert loss of the target antenna and the insert loss of the primary antenna; and the second difference is a difference between the power management maximum output power reduction (MPR) (i.e., P-MPR) of the target antenna and the P-MPR of the primary antenna.

In some examples, the insert loss of the target antenna includes the sum of the insert loss of the switch in the SRS transmission path of the target antenna and the line loss; and the insert loss of the primary antenna includes the sum of the insert loss of the switch in the SRS transmission path of the primary antenna and line loss.

Here, the P-MPR of the primary antenna can be configured to limit the maximum transmit power of the primary antenna to reduce ionizing radiation generated when the terminal transmits signals using the primary antenna. The P-MPR of a diversity antenna can be configured to limit the maximum transmit power of the diversity antenna to reduce the ionizing radiation generated when the terminal transmits signals using the diversity antenna.

In some examples, the method further includes:
receiving a trigger condition for reporting the power headroom report from the network device.

In one embodiment, step 501 may include at least one of the following steps:
when the SRS antenna is switched to the target antenna and the difference between the insert loss of the target antenna and the insert loss of the primary antenna is greater than a first threshold, sending the power headroom report to the network device;
when the SRS antenna is switched to the target antenna and the transmit power difference between the transmit power of the target antenna and the transmit power of the primary antenna is greater than a second threshold, sending the power headroom report to the network device;
when the SRS antenna is switched to the target antenna and a sum of the first difference and the second difference is greater than a third threshold, sending the power headroom report to the network device.

For example, a 1T4R terminal has four antennas: antenna 1 is the primary antenna, and antennas 2, 3, and 4 are diversity antennas. If the SRS antenna is switched from antenna 1 to antenna i (i can be 2, 3, or 4), and the difference between the insert loss of antenna i and the insert loss of antenna 1 is greater than a first threshold, or the difference between the configured maximum output power of antenna i and the configured maximum output power of antenna 1 is greater than a second threshold, then the terminal sends the power headroom report to the network device.

In one embodiment, at least one of the first, second, and third thresholds is pre-set by the terminal or determined by the terminal based on configuration information from the network device.

In some examples, the priority of the first threshold pre-set by the terminal is lower than the priority of the first threshold configured by the network device.

In some examples, the priority of the second threshold pre-set by the terminal is lower than the priority of the second threshold configured by the network device.

In some examples, the priority of the third threshold pre-set by the terminal is lower than the priority of the third threshold configured by the network device.

In another embodiment, at least one of the first, second, and third thresholds may be agreed upon by a protocol.

In one embodiment, the configuration information is configuration information of the SRS resource set.

The configuration information of the SRS resource set indicates at least one SRS resource set for the terminal and the antenna port corresponding to each SRS resource in each SRS resource set. Each SRS resource set contains at least one SRS resource. The terminal can transmit SRS on the antenna port corresponding to the SRS resource configured by the network device.

For example, for a 2T8R terminal, the network device configures two SRS resource sets for the terminal, each SRS resource set containing two SRS resources, and each SRS resource corresponding to two antenna ports. The terminal can switch between two receive antennas at a time. The same SRS resource can be mapped to different antenna ports and transmitted on two transmit channels. The terminal must transmit the SRS corresponding to eight receive antennas on four SRS resources before the network device can obtain channel state information corresponding to each of the eight receive antennas by utilizing channel reciprocity.

In some examples, when two SRS resources in an SRS resource set are used to transmit SRS in the same timeslot, the configuration information also indicates the guard interval between the two SRS resources.

It is worth noting that the SRS antenna switching order (i.e., the SRS antenna transmission order for cycling) of the terminal can be determined by the terminal based on the configuration information of the SRS resource set.

In one embodiment, the method may further include:
receiving the configuration information sent by the network device based on the capability information of the terminal; where the capability information of the terminal indicates the SRS antenna switching capability supported by the terminal.

The SRS antenna switching capability supported by the terminal may include one or more of the following: 1T2R (1 transmit 2 receive), IT4R (1 transmit 4 receive), 2T4R (2 transmit 4 receive), 1T8R (1 transmit 8 receive), 2T8R (2 transmit 8 receive), etc.

In this embodiment, the capability information of the terminal is used by the network device to determine the SRS antenna switching capability supported by the terminal, thereby enabling the network device to configure the corresponding SRS resource set based on the SRS antenna switching capability of the terminal.

In one embodiment, the method further includes:
receiving indication information from the network device, where the indication information is configured to determine whether the terminal is allowed to send a power headroom report to the network device when the SRS antenna is switched.

In some examples, the indication information may use a single bit to indicate whether the terminal is allowed to send a power headroom report to the network device when the SRS antenna is switched. For example, "1" indicates that the terminal is allowed to send a power headroom report to the network device when the SRS antenna is switched, and "0" indicates that the terminal is not allowed to send a power headroom report to the network device when the SRS antenna is switched.

In some examples, the indication information may be carried in an RRC (Radio Resource Control) message, MAC-CE, or DCI sent by the network device to the terminal.

In one embodiment, as shown in FIG. 6, sending the transmit power information to the network device in step 301 includes:
Step 601: sending capability information of the terminal to the network device; where the capability information of the terminal indicates the SRS antenna switching capability supported by the terminal; and the capability information of the terminal includes transmit power information for the diversity antennas and primary antenna of the terminal.

In some examples, the SRS antenna switching capability supported by the terminal is used by the network device to determine the configuration information of the SRS resource which needs to be sent to the terminal.

In this embodiment, the capability information of the terminal indicates the SRS antenna switching capability supported by the terminal. This capability information includes transmit power information for each diversity antenna and the primary antenna of the terminal. This allows the network device to determine the transmit power difference between each diversity antenna and the primary antenna when configuring the corresponding SRS resource set based on the SRS antenna switching capability supported by the terminal. When the terminal uses the configuration of the SRS resource set to perform SRS antenna switching, the network device can directly compensate for a deviation in the channel estimation for SRS associated with the target antenna based on the transmit power difference between the target antenna transmitting the SRS signal and the primary antenna, eliminating the need for the terminal to send transmit power information each time it switches antennas. This saves network resources.

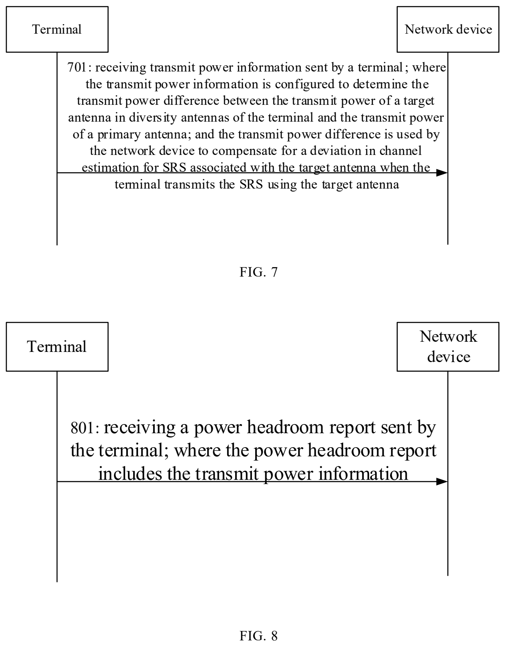

FIG. 7 is a flowchart illustrating an information processing method according to an example embodiment. The information processing method is performed by a network device. As shown in FIG. 7. The information processing method may include the following:
Step 701: receiving transmit power information sent by a terminal; where the transmit power information is configured to determine the transmit power difference between the transmit power of a target antenna in diversity antennas of the terminal and the transmit power of a primary antenna; and the transmit power difference is used by the network device to compensate for a deviation in channel estimation for SRS associated with the target antenna when the terminal transmits the SRS using the target antenna.

In the present disclosure, on the context of the present disclosure, the information processing method may also be understood as a communication method.

In some examples, the network device may be a base station, for example, the network device may be a gNB or an eNB.

In some examples, the terminal may be various mobile or fixed terminals. For example, the terminal may be, but is not limited to, a mobile phone, a wearable device, an IoT device, etc.

The terminal includes multiple antennas, including a primary antenna and a diversity antenna.

In the embodiments of the present disclosure, the antenna may also be replaced by: an antenna group, an antenna set, an antenna port, an antenna port group, an antenna port set, a beam, a beam set, an antenna array, an antenna port array, or an antenna panel, etc.

The terminal supports SRS antenna switching function. The terminal can utilize a small number of transmit channels through switches to connect to different antennas for SRS transmission in different transmit time slots, allowing network devices to obtain downlink channel information for different antennas by leveraging channel reciprocity.

In the embodiment, the network device receives transmit power information sent by the terminal, enabling the network device to determine the transmit power difference between the primary antenna of the terminal and the target antenna transmitting the SRS signal of the terminal based on the received transmit power information, and to compensate for a deviation in the channel estimation for SRS associated with the target antenna based on the transmit power difference.

The SRS channel estimation associated with the target antenna is configured to estimate the downlink channel of the antenna port mapped to the target antenna.

In some examples, the transmit power information includes at least the transmit power of the target antenna in the diversity antennas of the terminal.

In other examples, the transmit power information includes the transmit power of the diversity antennas and the transmit power of the primary antenna, with the diversity antennas including at least the target antenna.

In yet other examples, the transmit power information includes the transmit power difference between the transmit power of the target antenna and the transmit power of the primary antenna.

In some examples, when the transmit power of the target antenna includes the configured maximum output power of the target antenna, the transmit power difference includes the power difference between the configured maximum output power of the target antenna and the configured maximum output power of the primary antenna.

In some examples, when the transmit power of the target antenna includes the power headroom of the target antenna, the transmit power difference includes the power difference between the power headroom of the target antenna and the power headroom of the primary antenna.

In the present disclosure, the power headroom may also be referred to as "headroom power."

For example, the configured maximum output power of antenna i of the terminal indicates the maximum power allowed to be output by antenna i. Here, i is less than or equal to N, where N is the total number of antennas in the terminal.

The power headroom for antenna i of the terminal is the difference between the configured maximum output power of antenna i and the estimated uplink transmission power.

The estimated uplink transmission power may be, for example, one of the following: an estimated PUSCH transmission power, a sum of an estimated PUCCH and PUSCH transmission power, or an estimated SRS transmission power.

In some examples, the transmit power difference between the transmit power of target antenna and the transmit power of the primary antenna is used as a deviation compensation value for the SRS channel estimation associated with the target antenna. Alternatively, the transmit power difference between the transmit power of target antenna and the transmit power of the primary antenna is configured to calculate the deviation compensation value for the SRS channel estimation associated with the target antenna.

In some examples, the target antenna and the primary antenna may both be a single antenna; or the target antenna and the primary antenna may both be antenna groups composed of multiple antennas.

In some examples, the terminal may send the transmit power information to the network device in response to an acquisition request from the network device. For example, the acquisition request of the network device may be sent to the terminal when the terminal accesses the network.

In an embodiment of the present disclosure, the network device receives transmit power information sent by the terminal, enabling the network device to determine the transmit power difference between the primary antenna of the terminal and the target antenna in the diversity antennas of the terminal based on the transmit power information. When the terminal transmits an SRS using the target antenna, the network device compensates for a deviation in the channel estimation for SRS associated with the target antenna based on the transmit power difference. This reduces the channel estimation deviation caused by the additional insert loss of the target antenna transmitting the SRS signal compared to the primary antenna, thereby improving the accuracy of the downlink channel estimation by the network device for the target antenna and enhancing SRS channel estimation performance.

In one embodiment, the transmit power difference between the transmit power of the target antenna and the transmit power of the primary antenna may include at least one of the following:
a power difference between the configured maximum output power of the target antenna and the configured maximum output power of the primary antenna;
a power difference between the power headroom of the target antenna and the power headroom of the primary antenna.

In the embodiment, since the insert loss information of the SRS transmission path of the target antenna can directly affect the transmit power at the configured maximum output power of the target antenna, the power difference between the configured maximum output power of the target antenna and the configured maximum output power of the primary antenna can directly reflect the additional insert loss of the target antenna compared to the primary antenna (i.e., the difference between the insert loss of the SRS transmission path of the target antenna and the insert loss of the SRS transmission path of the primary antenna).

In addition, the power headroom of the target antenna is related to the configured maximum output power of the target antenna. Therefore, the power difference between the power headroom of the target antenna and the power headroom of the primary antenna can indirectly reflect the additional insert loss of the target antenna compared to the primary antenna.

As a result, the network device can compensate for a deviation in the channel estimation for SRS associated with the target antenna based on the power difference between the configured maximum output power of the target antenna and the configured maximum output power of the primary antenna, and/or the power difference between the power headroom of the target antenna and the power headroom of the primary antenna. This can reduce the channel estimation deviation caused by the additional insert loss of the target antenna transmitting the SRS signal compared to the primary antenna, thereby improving the accuracy of the downlink channel estimation by the network device for the target antenna and enhancing SRS channel estimation performance.

In one embodiment, the transmit power information sent by the terminal to the network device includes transmit power information of the target antenna and transmit power information of the primary antenna.

Here, the transmit power information of the target antenna is configured to determine the transmit power of the target antenna, and the transmit power information of the primary antenna is configured to determine the transmit power of the primary antenna.

In some examples, the transmit power information sent by the terminal to the network device includes at least one of the following:
the configured maximum output power of the target antenna and the configured maximum output power of the primary antenna;
the power headroom of the target antenna and the power headroom of the primary antenna.

In one embodiment, in a case where the transmit power information of the primary antenna has already been sent by the terminal to the network device, the transmit power information includes transmit power information for the target antenna.

In some examples, the transmit power information of the primary antenna may be sent to the network device when the SRS antenna of the terminal switches from the primary antenna to a first antenna, where the first antenna may be a diversity antenna different from the target antenna among the diversity antennas of the terminal.

When the SRS antenna of the terminal switches from the primary antenna to the first antenna, the transmit power information of the primary antenna and the transmit power information of the first antenna may be sent by the terminal to the network device.

In some examples, in a case where the terminal has sent the network device the configured maximum output power of the primary antenna, the transmit power information sent by the terminal to the network device includes the configured maximum output power of the target antenna.

In some examples, in a case where the terminal has sent the network device the power headroom of the primary antenna, the transmit power information sent by the terminal to the network device includes the power headroom of the target antenna.

In one embodiment, the transmit power information includes the transmit power difference between the transmit power of the target antenna and the transmit power of the primary antenna.

In some examples, the transmit power difference includes at least one of the following: the power difference between the configured maximum output power of the target antenna and the configured maximum output power of the primary antenna; or the power difference between the power headroom of the target antenna and the power headroom of the primary antenna.

In one embodiment, as shown in FIG. 8, in step 701, receiving the transmit power information sent by the terminal may include:
Step 801: receiving a power headroom report sent by the terminal; where the power headroom report includes the transmit power information.

In some examples, the power headroom report (PHR) sent by the terminal is carried in a Media Access Control (MAC) control element (CE).

In some examples, the PHR reporting format may be PHR type 3.

In some examples, the power headroom report may be sent by the terminal based on an SRS antenna switching event.

As an example, the SRS antenna switching event may be a terminal-triggered SRS transmission by cycling. The terminal-triggered SRS transmission by cycling may be triggered when the terminal receives SRS configuration information sent by the network device.

For example, the network device may receive the power headroom report sent by the terminal when the terminal triggers the SRS transmission by cycling. The power headroom report carries transmit power information for each antenna of the terminal, or carries the transmit power difference between the transmit power of each diversity antenna of the terminal and the transmit power of the primary antenna.

As another example, the SRS antenna switching event may be a switching of the SRS antenna of the terminal. Here, the SRS antenna is an antenna from which the terminal transmits an SRS signal.

For example, the SRS antenna switching may be that the SRS antenna is about to be switched to the target antenna or the SRS antenna has already been switched to the target antenna.

As an example, the network device may receive a power headroom report sent by the terminal when the terminal transmits SRS on each antenna based on the SRS antenna switching event.

In some examples, the network device receives a power headroom report sent by the terminal based on DCI. For example, the indication information carried in the DCI may indicate the uplink resource for the terminal to transmit a PHR. The uplink resource may be a time slot resource used for the PHR.

In some examples, the network device receives a power headroom report sent by the terminal in response to a request from the network device, where the request instructs the terminal to send a power headroom report containing transmit power information to the network device. For example, the request may be sent by the network device to the terminal when the terminal accesses the network.

In this embodiment, the network device receives a power headroom report containing transmit power information. For example, the power headroom report may include reporting the configured maximum output power of the target antenna and the configured maximum output power of the primary antenna. For another example, the power headroom report may include the power headroom of the target antenna and the power headroom of the primary antenna. This allows the network device to determine the transmit power difference between the target antenna and the primary antenna, thereby compensating for a deviation in the channel estimation for SRS associated with the target antenna and improving the accuracy of the SRS channel estimation.

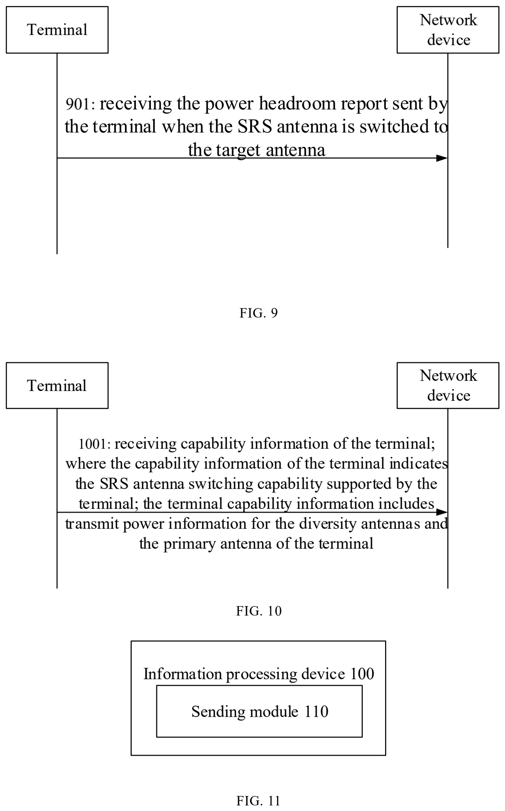

In one embodiment, as shown in FIG. 9, receiving the power headroom report sent by the terminal in step 801 includes:
Step 901: receiving the power headroom report sent by the terminal when the SRS antenna is switched to the target antenna.

In some examples, the network device receives the power headroom report sent by the terminal on the antenna port mapped to the target antenna when the SRS antenna is switched to the target antenna.

In some examples, switching the SRS antenna to the target antenna may include: the SRS antenna is about to be switched to the target antenna, or the SRS antenna has already been switched to the target antenna.

In some examples, to save network resources, the network device may receive the power headroom report sent by the terminal based on a triggering condition for reporting the power headroom report when the SRS antenna is switched to the target antenna.

In some examples, the triggering condition for reporting the power headroom report may include at least one of the following:
a difference between the insert loss of the target antenna and the insert loss of the primary antenna is greater than a first threshold;
a difference between the transmit power of the target antenna and the transmit power of the primary antenna is greater than a second threshold;
a sum of a first difference and a second difference is greater than a third threshold; where the first difference is a difference between the insert loss of the target antenna and the insert loss of the primary antenna; and the second difference is a difference between the P-MPR of the target antenna and the P-MPR of the primary antenna.

In some examples, the insert loss of the target antenna includes the sum of the insert loss of the switch in the SRS transmission path of the target antenna and the line loss; and the insert loss of the primary antenna includes the sum of the insert loss of the switch in the SRS transmission path of the primary antenna and the line loss.

Here, the P-MPR of the primary antenna can be configured to limit the maximum transmit power of the primary antenna to reduce ionizing radiation generated when the terminal transmits signals using the primary antenna. The P-MPR of the diversity antenna can be configured to limit the maximum transmit power of the diversity antenna to reduce the ionizing radiation generated when the terminal transmits signals using the diversity antenna.

In one embodiment, the method may further include:
when the network device determines that the SRS antenna of the terminal has been switched to the target antenna and has not received the power headroom report, compensating for the deviation of the channel estimation for SRS associated with the target antenna according to a preset value.

In some examples, the trigger condition for reporting the power headroom report includes the difference between the insert loss of the target antenna and the insert loss of the primary antenna is greater than a first threshold; and the preset value can be greater than or equal to 0 and less than the first threshold.

In some examples, the triggering condition for reporting the power headroom report includes the transmit power difference is greater than a second threshold; and the preset value may be greater than or equal to 0 and less than the second threshold.

In some examples, the triggering condition for reporting the power headroom report includes a sum of a first difference and a second difference is greater than a third threshold; the preset value may be greater than or equal to 0 and less than the third threshold; the first difference is a difference between the insert loss of the target antenna and the insert loss of the primary antenna; and the second difference is a difference between the P-MPR of the target antenna and the P-MPR of the primary antenna.

In this embodiment, because the SRS antenna of the terminal is switched to the target antenna, if the triggering condition for reporting the power headroom report is not met (for example, the difference between the insert loss of the target antenna and the insert loss of the primary antenna is less than or equal to the first threshold), the terminal will not report the power headroom report. In this case, the network device can directly compensate for the deviation of the channel estimation for SRS associated with the target antenna based on the preset value, thereby saving network resources.

It is worth noting that the SRS antenna switching order of the terminal (i.e., the SRS antenna transmission order by cycling) may be determined by the terminal based on the configuration information of the SRS resource set.

In one embodiment, the terminal sends the power headroom report to the network device when the SRS antenna is switched to the target antenna and the difference between the insert loss of the target antenna and the insert loss of the primary antenna is greater than the first threshold;

and/or, the terminal sends the power headroom report to the network device when the SRS antenna is switched to the target antenna and the transmit power difference is greater than the second threshold;

and/or, the terminal sends the power headroom report to the network device when the SRS antenna is switched to the target antenna and the sum of the first difference and the second difference is greater than the third threshold. The first difference is a difference between the insert loss of the target antenna and the insert loss of the primary antenna, and the second difference is a difference between the power management maximum output power reduction (PMPR) of the target antenna and the PMPR of the primary antenna.

In one embodiment, at least one of the first threshold, the second threshold, and the third threshold is pre-set by the terminal or determined by the terminal based on configuration information from the network device.

In some examples, the priority of the first threshold preset by the terminal is lower than the priority of the first threshold configured by the network device.

In some examples, the priority of the second threshold preset by the terminal is lower than the priority of the second threshold configured by the network device.

In some examples, the priority of the third threshold preset by the terminal is lower than the priority of the third threshold configured by the network device.

In another embodiment, at least one of the first threshold, the second threshold, and the third threshold may be agreed upon by a protocol.

In one embodiment, the configuration information is configuration information of the SRS resource set.

The configuration information of the SRS resource set indicates at least one SRS resource set for the terminal and the antenna port configured to transmit each SRS resource in each SRS resource set. Each SRS resource set contains at least one SRS resource. The terminal can transmit an SRS on the SRS resource configured by the network device.

In some examples, when two SRS resources in an SRS resource set are used to transmit SRS in the same time slot, the configuration information further indicates a guard interval between the two SRS resources.

For example, for a 2T8R terminal, the network device configures two SRS resource sets for the terminal. Each SRS resource set contains two SRS resources, and each SRS resource corresponds to two antenna ports. The terminal can switch between two receive antennas at a time. The same SRS resource can be mapped to different antenna ports and transmitted on both transmit channels. The terminal must transmit the SRS corresponding to all eight receive antennas on all four SRS resources before the network device can obtain channel state information corresponding to each of the eight receive antennas by utilizing channel reciprocity.

In one embodiment, the method further includes:
sending the configuration information to the terminal based on the capability information of the terminal; where the capability information of the terminal indicates the SRS antenna switching capability supported by the terminal.

The SRS antenna switching capability supported by the terminal may include one or more of the following: 1T2R (1 transmit, 2 receive), 1T4R (1 transmit, 4 receive), 2T4R (2 transmit, 4 receive), 1T8R (1 transmit, 8 receive), 2T8R (2 transmit, 8 receive), etc.

In this embodiment, the network device may determine the SRS antenna switching capability supported by the terminal based on the capability information of the terminal, and then configure the corresponding SRS resource set based on the SRS antenna switching capability of the terminal.

In one embodiment, the method further includes:
sending indication information to the terminal, where the indication information is configured to determine whether the terminal is allowed to send the power headroom report to the network device when the SRS antenna is switched.

In some examples, the indication information may use a single bit to indicate whether the terminal is allowed to send the power headroom report to the network device when the SRS antenna is switched. For example, "1" indicates that the terminal is allowed to send a power headroom report to the network device when the SRS antenna is switched, and "0" indicates that the terminal is not allowed to send a power headroom report to the network device when the SRS antenna is switched.

In some examples, the indication information may be carried in an RRC message, MAC-CE, or DCI sent by the network device.

In one embodiment, as shown in FIG. 10, receiving the transmit power information sent by the terminal in step 701 may include the following:
Step 1001: receiving capability information of the terminal; where the capability information of the terminal indicates the SRS antenna switching capability supported by the terminal; the capability information of the terminal includes transmit power information for the diversity antennas and the primary antenna of the terminal.

In some examples, the SRS antenna switching capability supported by the terminal is used by a network device to determine the configuration information of the SRS resource which needs to be sent to the terminal.

In this embodiment, the capability information of the terminal indicates the SRS antenna switching capability supported by the terminal. This capability information includes transmit power information for each diversity antenna and the primary antenna of the terminal. This allows the network device to determine the transmit power difference between each diversity antenna and the primary antenna when configuring the corresponding SRS resource set based on the SRS antenna switching capability supported by the terminal. When the terminal uses the configuration of the SRS resource set to perform SRS antenna switching, the network device can directly compensate for a deviation in the channel estimation for SRS associated with the target antenna based on the transmit power difference between the target antenna transmitting the SRS signal and the primary antenna, eliminating the need for the terminal to send transmit power information each time it switches antennas. This saves network resources.

To further illustrate any embodiment of the present disclosure, several specific examples are provided below.

The embodiments of the present disclosure provide an information processing method in which, upon an SRS antenna switch event, the terminal triggers a PHR reporting P_{CMAX,i}. The base station then compensates for a deviation in the channel estimation caused by additional antenna insert loss of SRS based on the reported maximum configuration P_{CMAX,i} and the reported P_{CMAX,m} of the primary antenna. P_{CMAX,i} is the configured maximum output power of receive antenna i on which the SRS is transmitted. P_{CMAX,m} is the configured maximum output power of primary antenna m.

An embodiments of the present disclosure provides an information processing method, which may include:
a base station sends a predetermined value to a terminal. When the terminal determines that the additional insert loss ΔT_{RxSRS} of receive antenna i, where the SRS is transmitted, exceeds the predetermined value, the terminal triggers PHR reporting P_{CMAX,i}. The base station compensates for a deviation in the channel estimation caused by the additional antenna insert loss of the SRS based on the reported P_{CMAX,i} and the reported P_{CMAX,m} of the primary antenna.

In one embodiment, the additional insert loss ΔT_{RxSRS} includes the sum of the additional line loss and the additional switch insert loss generated when the antenna switches to receive antenna i.

In another embodiment, the additional insert loss ΔT_{RxSRS} may include power deviation caused by different P-MPR values between the primary antenna and the diversity antenna. P-MPR includes power backoff for human safety or power backoff due to coexistence with other systems.

For example, the format of the PHR reporting may utilize PHR type 3 in the TS38.321 protocol.

In some examples, when the terminal supports the SRS antenna switching capability (SRS-TxSwitch capability) of 1T8R and the base station configures one SRS resource set (i.e., SRS resources set = 1), a predetermined value (e.g., the first threshold in the aforementioned embodiment) may be sent to the terminal. For example, the predetermined value may be 3dB or other values.

**Table 1:**

| Antenna port | ΔT_{RxSRS} (dB) | Predetermined value sent from base station to terminal | Whether to report PHR | Compensation for SRS channel estimation at base station side (dB) |
|---|---|---|---|---|
| Antenna 0 | NA | | Yes (P_{CMAX,m}) | 0 |
| Antenna 1 | ΔT_{RXSRS, 1} = 1 | | No | 0 or less than 3dB |
| Antenna 2 | ΔT_{RxSRS, 2} =2.5 | | No | 0 or less than 3dB |
| Antenna 3 | ΔT_{RxSRS, 3} =3.5 | 3 | Yes (P_{CMAX,3}) | P_{CMAX,m}-P_{CMAX,3} |
| Antenna 4 | ΔT_{RxSRS,} 4 =4 | | Yes (P_{CMAX,4}) | P_{CMAX,m}-P_{CMAX,4} |
| Antenna 5 | ΔT_{RxSRS, 5} =5 | | Yes | P_{CMAX,m}-P_{CMAX,5} |
| | | | (P_{CMAX,5}) | |
| Antenna 6 | ΔT_{RxSRS, 6} =5.5 | | Yes (P_{CMAX,6}) | P_{CMAX,m}-P_{CMAX,6} |
| Antenna 7 | ΔT_{RxSRS, 7} =6 | | Yes (P_{CMAX,7}) | P_{CMAX,m}-P_{CMAX,7} |

As an example, Table 1 shows the configuration information sent by the base station for a 1T8R terminal. This configuration information includes a predetermined value. The predetermined value is used by the terminal to determine whether to report a PHR when switching SRS antennas.

The terminal determines to report a PHR when the ΔT_{RxSRS} of receive antenna i, where the SRS is transmitted, is greater than the predetermined value compared to the primary antenna (antenna 0 in Table 1). The PHR carries the P_{CMAX} of receive antenna i. The base station compensates the SRS channel estimation corresponding to the receive antenna i based on the difference between the P_{CMAX} of receive antenna i and the P_{CMAX,m} of the primary antenna.

Also, the terminal determines not to report a PHR when the ΔT_{RxSRS} of receive antenna i, where the SRS is transmitted, is less than or equal to the predetermined value. In this case, the base station can compensate the SRS channel estimation corresponding to the receive antenna i based on a preset value. For example, the preset value is greater than or equal to 0 and less than the predetermined value.

In some examples, if the terminal supports an SRS antenna switching capability (SRS-TxSwitch capability) of 2T8R and the base station configures two SRS resource sets (i.e., SRS resources set = 2), a predetermined value (e.g., the first threshold in the aforementioned embodiment) may be sent to the terminal. This predetermined value may be 3dB or other values.

**Table 2:**

| Antenna port | ΔT_{RXSRS} (dB) | Predetermined value sent from base station to terminal | Whether to report PHR | Compensation for SRS channel estimation at base station side (dB) |
|---|---|---|---|---|
| Antenna 0 | NA | | Yes (P_{CMAX,m}) | 0 |
| Antenna 1 | | | | |
| Antenna 2 | ΔT_{RxSRS, 1} =2 | | No | 0 or less than 3dB |
| Antenna 3 | | 3 | | |
| Antenna 4 | ΔT_{RxSRS, 2} =3.5 | | Yes (P_{CMAX,2}) | P_{CMAX,m}-P_{CMAX,2} |
| Antenna 5 | | | | |
| Antenna 6 | ΔT_{RxSRS, 3} =4 | | Yes (P_{CMAX,3}) | P_{CMAX,m}-P_{CMAX,3} |
| Antenna 7 | | | | |

As an example, Table 2 shows the configuration information sent by the base station for a 2T8R terminal. This configuration information includes a predetermined value. The predetermined value is used by the terminal to determine whether to report a PHR when switching SRS antennas.

The terminal determines to report a PHR when the ΔT_{RxSRS} of receive antenna group i, where the SRS is transmitted, is greater than the predetermined value compared to the primary antenna group (the antenna group to which antennas 0 and 1 belong in Table 2). The PHR includes the P_{CMAX} of receive antenna group i. The base station compensates the SRS channel estimation corresponding to receive antenna group i based on the difference between the P_{CMAX} of receive antenna group i and the P_{CMAX,m} of the primary antenna group.

Also, the terminal determines not to report a PHR when the ΔT_{RxSRS} of receive antenna group i, where the SRS is transmitted, is less than or equal to the predetermined value. In this case, the base station can compensate the SRS channel estimation corresponding to receive antenna group i based on a preset value. For example, the preset value is greater than or equal to 0 and less than the predetermined value.

When performing SRS channel estimation, the base station can use the information in the above table to compensate for a deviation in the channel estimation for SRS caused by the additional insert loss of each antenna.

In one embodiment, when the base station configures a terminal to perform an SRS antenna switching event, the base station requires the terminal to report a PHR when transmitting SRS on each antenna port. The base station compensates for the deviation caused by the additional insert loss on each antenna port based on the PCmax value in the reported PHR. In this example, the base station does not need to issue a predetermined value.

In another embodiment, when the base station configures a terminal to perform an SRS antenna switching event, the terminal reports a PHR on an antenna port where the additional insert loss ΔT_{RxSRS} exceeds a predetermined value. The base station compensates for the deviation caused by the additional insert loss on each antenna port based on the PCmax value in the reported PHR. The predetermined value is a value preset by the terminal.

In one embodiment, the base station determines which antenna ports require reporting and determines the compensation value based on the capability reported in the SRS antenna switching capability (SRS-TxSwitch capability) of the terminal and the number of SRS ports in the SRS resource set configured by the base station for the terminal.

In one embodiment, the compensation value is the difference between P_{CMAX,m} and P_{CMAX,i}, where P_{CMAX,m} is the P_{cmax} value of the primary antenna port, and P_{CMAX,i} is the P_{cmax} value reported by antenna port i.

In another embodiment, the base station instructs the terminal via signaling whether to allow the PHR reporting during SRS antenna switching.

The following are device embodiments of the present disclosure, which can be configured to perform corresponding method embodiments of the present disclosure. For details not disclosed in the device embodiments of the present disclosure, please refer to the corresponding method embodiments of the present disclosure.

FIG. 11 is a block diagram of an information processing device according to an example embodiment. As shown in FIG. 11, the information processing device is applied to a terminal. The information processing device 100 may include:
a sending module 110 is configured to send transmit power information to a network device; the transmit power information is configured to determine the transmit power difference between the transmit power of a target antenna in the diversity antenna of the terminal and the transmit power of the primary antenna; the transmit power difference is used by the network device to compensate for a deviation in the channel estimation for SRS associated with the target antenna when the terminal transmits an SRS using the target antenna.

In one embodiment, the transmit power includes at least one of the following:
a configured maximum output power;
a power headroom.

In one embodiment, the transmit power information includes transmit power information of the target antenna and transmit power information of the primary antenna;
or, in a case where the transmit power information of the primary antenna has been sent by the terminal to the network device, the transmit power information includes transmit power information of the target antenna;
or, the transmit power information includes the transmit power difference.

In one embodiment, the sending module 110 is configured to:
send a power headroom report to the network device; where the power headroom report includes the transmit power information.

In one embodiment, the sending module 110 is configured to:
send a power headroom report to the network device when the SRS antenna is switched to the target antenna.

In one embodiment, the sending module 110 is configured to perform at least one of the following:
when the SRS antenna is switched to the target antenna and the difference between the insert loss of the target antenna and the insert loss of the primary antenna is greater than a first threshold, send the power headroom report to the network device;
when the SRS antenna is switched to the target antenna and the transmit power difference is greater than a second threshold, send the power headroom report to the network device;
when the SRS antenna is switched to the target antenna and a sum of a first difference and a second difference is greater than a third threshold, send the power headroom report to the network device; where the first difference is a difference between the insert loss of the target antenna and the insert loss of the primary antenna; and the second difference is a difference between the P-MPR of the target antenna and the P-MPR of the primary antenna.

In one embodiment, at least one of the first threshold, the second threshold, and the third threshold is pre-set by the terminal or determined by the terminal based on configuration information from the network device.

In one embodiment, the configuration information is configuration information of an SRS resource set.

In one embodiment, the device further includes:
a first receiving module configured to receive the configuration information sent by the network device based on the capability information of the terminal; the capability information of the terminal indicates the SRS antenna switching capability supported by the terminal.

In one embodiment, the device further includes:
a second receiving module configured to receive indication information from the network device, where the indication information is configured to determine whether to allow the terminal to send the power headroom report to the network device during SRS antenna switching.

In one embodiment, the sending module 110 is configured to:
send the capability information of the terminal to the network device; where the capability information of the terminal indicates the SRS antenna switching capability supported by the terminal; the capability information of the terminal includes transmit power information for the diversity antenna and primary antenna of the terminal.

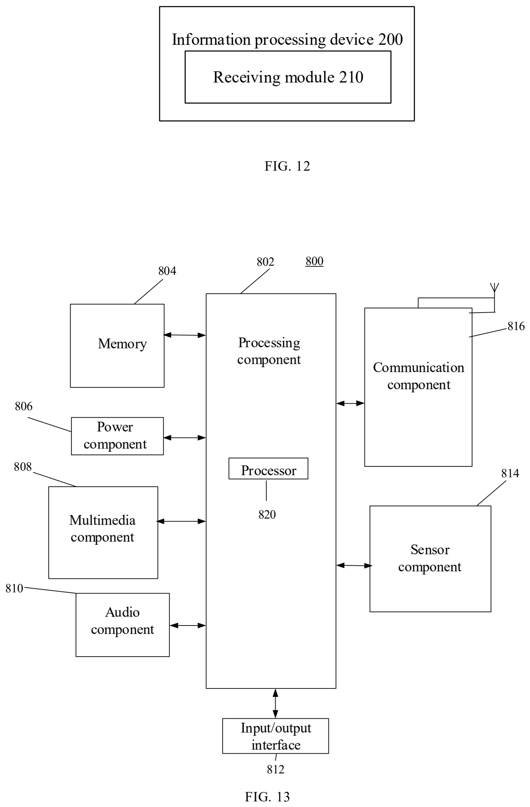

FIG. 12 is a structural diagram of an information processing device according to an example embodiment. As shown in FIG. 12, the information processing device is applied to a network device. The information processing device 200 may include:
a receiving module 210 configured to receive transmit power information sent by a terminal; where the transmit power information is configured to determine the transmit power difference between the transmit power of a target antenna in the diversity antenna of the terminal and the transmit power of a primary antenna; where the transmit power difference is used by the network device to compensate for a deviation in the channel estimation for SRS associated with the target antenna when the terminal transmits an SRS using the target antenna.

In one embodiment, the transmit power includes at least one of the following:
a configured maximum output power;
a power headroom.

In one embodiment, the transmit power information includes transmit power information of the target antenna and transmit power information of the primary antenna;
Or, in a case where the transmit power information of the primary antenna has been sent by the terminal to the network device, the transmit power information includes transmit power information of the target antenna.

Or, the transmit power information includes the transmit power difference.

In one embodiment, the receiving module 210 is configured to:
receive a power headroom report sent by the terminal; where the power headroom report includes the transmit power information.

In one embodiment, the receiving module 210 is configured to:
receive the power headroom report sent by the terminal when the SRS antenna is switched to the target antenna.

In one embodiment, the power headroom report is sent by the terminal to the network device when the SRS antenna is switched to the target antenna and the difference between the insert loss of the target antenna and the insert loss of the primary antenna is greater than a first threshold;
and/or, the power headroom report is sent by the terminal to the network device when the SRS antenna is switched to the target antenna and the transmit power difference is greater than a second threshold;
and/or, the power headroom report is sent by the terminal to the network device when the SRS antenna is switched to the target antenna and the sum of the first difference and the second difference is greater than a third threshold; where the first difference is the difference between the insert loss of the target antenna and the insert loss of the primary antenna; and the second difference is the difference between the P-MPR of the target antenna and the P-MPR of the primary antenna.

In one embodiment, at least one of the first threshold, the second threshold, and the third threshold is pre-set by the terminal or determined by the terminal based on configuration information from the network device.

In one embodiment, the configuration information is SRS resource set configuration information.

In one embodiment, the device further includes:
a first sending module configured to send the configuration information to the terminal based on the capability information of the terminal; where the capability information of the terminal indicates the SRS antenna switching capability supported by the terminal.

In one embodiment, the device further includes:
a second sending module configured to send indication information to the terminal; where the indication information is configured to determine whether the terminal is allowed to send the power headroom report to the network device during SRS antenna switching.

In one embodiment, the receiving module 210 is configured to:
receive the capability information of the terminal; where the capability information of the terminal indicates the SRS antenna switching capability supported by the terminal; and the capability information of the terminal includes transmit power information of the diversity antenna and primary antenna of the terminal.

An embodiment of the present disclosure provides a communication system including:
a terminal configured to send transmit power information to a network device; the transmit power information is configured to determine the transmit power difference between the transmit power of a target antenna in the diversity antenna of the terminal and the transmit power of a primary antenna of the terminal; the transmit power difference is used by the network device to compensate for a deviation in the channel estimation for SRS associated with the target antenna when the terminal transmits an SRS using the target antenna;
a network device configured to receive the transmit power information sent by the terminal.

In one embodiment, the transmit power information includes at least one of the following:
a configured maximum output power;
a power headroom.

In one embodiment, the transmit power information includes: transmit power information of the target antenna and transmit power information of the primary antenna;
or, in a case where the transmit power information of the primary antenna has been sent by the terminal to the network device, the transmit power information includes transmit power information of the target antenna;
or, the transmit power information includes the transmit power difference.

In one embodiment, the terminal is configured to:
send a power headroom report to the network device; where the power headroom report includes the transmit power information.

In one embodiment, the terminal is configured to:
send a power headroom report to the network device when the SRS antenna is switched to the target antenna.

In one embodiment, the terminal is configured to perform at least one of the following:
when the SRS antenna is switched to the target antenna and the difference between the insert loss of the target antenna and the insert loss of the primary antenna is greater than a first threshold, sending the power headroom report to the network device;
when the SRS antenna is switched to the target antenna and the transmit power difference is greater than a second threshold, sending the power headroom report to the network device;
when the SRS antenna is switched to the target antenna and the sum of the first difference and the second difference is greater than a third threshold, sending the power headroom report to the network device. The first difference is the difference between the insert loss of the target antenna and the insert loss of the primary antenna; and the second difference is the difference between the P-MPR of the target antenna and the P-MPR of the primary antenna.

In one embodiment, at least one of the first threshold, the second threshold, and the third threshold is pre-set by the terminal or determined by the terminal based on configuration information from the network device.

In one embodiment, the configuration information is configuration information of an SRS resource set.

In one embodiment, the terminal is configured to:
receive configuration information sent by the network device based on the capability information of the terminal; where the capability information of the terminal indicates the SRS antenna switching capability supported by the terminal.

In one embodiment, the terminal is configured to:
receive indication information from the network device, where the indication information is configured to determine whether the terminal is allowed to send the power headroom report to the network device when the SRS antenna is switched.

In one embodiment, the terminal is configured to:
send the capability information of the terminal to the network device; where the capability information of the terminal indicates the SRS antenna switching capability supported by the terminal; the capability information of the terminal includes transmit power information of the diversity antenna and primary antenna of the terminal.

In one embodiment, the network device is configured to:
receive a power headroom report sent by the terminal; where the power headroom report includes the transmit power information.

In one embodiment, the network device is configured to:
receive the power headroom report sent by the terminal when the SRS antenna is switched to the target antenna.

In one embodiment, the network device is configured to:
send configuration information to the terminal based on the capability information of the terminal; where the capability information of the terminal indicates the SRS antenna switching capability supported by the terminal.

In one embodiment, the network device is configured to:
send indication information to the terminal, where the indication information is configured to determine whether the terminal is allowed to send the power headroom report to the network device when SRS antenna switching occurs.

In one embodiment, the network device is configured to:
receive capability information of the terminal; where the capability information of the terminal indicates the SRS antenna switching capability supported by the terminal; the capability information of the terminal includes transmit power information for the diversity antenna and primary antenna of the terminal.

The present disclosure provides a communication device comprising:
a memory for storing processor-executable instructions;
a processor, connected to the memory;
where the processor is configured to perform the information processing method provided in any of the aforementioned embodiments.

The processor may include various types of storage media, where the storage medium is a non-transitory computer storage medium that can continue to memory information stored thereon after the communication device loses power.

Here, the communication device includes a terminal or a network device. The network device may be an access network device, such as a base station.

The processor may be connected to a memory via a bus, etc., for reading an executable program stored in the memory, such as at least one of the information processing methods shown in FIG. 3 to FIG. 10.

FIG. 13 is a block diagram of a UE 800 according to an example embodiment. For example, UE 800 may be a mobile phone, a computer, a digital broadcast user equipment, a messaging device, a game console, an IoT device, a tablet device, a medical device, a fitness device, a personal digital assistant, etc.

Referring to FIG. 13, UE 800 may include one or more of the following components: a processing component 802, a memory 804, a power component 806, a multimedia component 808, an audio component 810, an input/output (I/O) interface 812, a sensor component 814, and a communication component 816.

The processing component 802 generally controls the overall operation of UE 800, such as operations associated with display, phone calls, data communications, camera operation, and recording. The processing component 802 may include one or more processors 820 to execute instructions to generate all or part of the steps of the aforementioned method. Furthermore, the processing component 802 may include one or more modules to facilitate interaction between the processing component 802 and other components. For example, the processing component 802 may include a multimedia module to facilitate interaction between the multimedia component 808 and the processing component 802.

The memory 804 is configured to store various types of data to support the operation of UE 800. Examples of such data include instructions for any application or method operating on UE 800, contact data, phonebook data, messages, images, videos, etc. The memory 804 may be implemented by any type of volatile or non-volatile memory device, or a combination thereof, such as static random access memory (SRAM), electrically erasable programmable read-only memory (EEPROM), erasable programmable read-only memory (EPROM), programmable read-only memory (PROM), read-only memory (ROM), magnetic memory, flash memory, magnetic disk, or optical disk.

The power component 806 provides power to the various components of UE 800. The power component 806 may include a power management system, one or more power supplies, and other components associated with generating, managing, and distributing power for the UE 800.

The multimedia component 808 includes a screen that provides an output interface between the UE 800 and the user. In one embodiment, the screen may include a liquid crystal display (LCD) and a touch panel (TP). If the screen includes a touch panel, it may be implemented as a touch screen to receive input signals from the user. The touch panel includes one or more touch sensors to sense touches, swipes, and gestures on the touch panel. The touch sensors may not only sense the boundaries of a touch or swipe action, but also the duration and pressure associated with the touch or swipe action. In one embodiment, the multimedia component 808 includes a front camera and/or a rear camera. When the UE 800 is in an operating mode, such as a capture mode or a video mode, the front camera and/or the rear camera may receive external multimedia data. Each of the front and rear cameras may have a fixed optical lens system or have variable focus and optical zoom capabilities.

The audio component 810 is configured to output and/or input audio signals. For example, the audio component 810 includes a microphone (MIC) configured to receive external audio signals when the UE 800 is in an operating mode, such as call mode, recording mode, and voice recognition mode. The received audio signals may be further stored in the memory 804 or transmitted via the communication component 816. In one embodiment, the audio component 810 also includes a speaker for outputting the audio signals.

The I/O interface 812 provides an interface between the processing component 802 and peripheral interface modules. The peripheral interface modules may be a keyboard, a click wheel, buttons, etc. These buttons may include, but are not limited to, a home button, volume buttons, a start button, and a lock button.

The sensor component 814 includes one or more sensors for providing various status assessments of the UE 800. For example, the sensor component 814 can detect the open/closed state of the device 800, the relative positioning of components, such as the display and keypad of the UE 800, changes in the position of the UE 800 or a component of the UE 800, the presence or absence of user contact with the UE 800, the orientation or acceleration/deceleration of the UE 800, and changes in the temperature of the UE 800. The sensor component 814 may include a proximity sensor configured to detect the presence of nearby objects without any physical contact. The sensor component 814 may also include an optical sensor, such as a CMOS or CCD image sensor, for use in imaging applications. In one embodiment, the sensor component 814 may also include an accelerometer, a gyroscope, a magnetic sensor, a pressure sensor, or a temperature sensor.

The communication component 816 is configured to facilitate wired or wireless communication between the UE 800 and other devices. The UE 800 may access a wireless network based on a communication standard, such as WiFi, 4G, or 5G, or a combination thereof. In one example embodiment, the communication component 816 receives broadcast signals or broadcast-related information from an external broadcast management system via a broadcast channel. In one example embodiment, the communication component 816 further includes a near-field communication (NFC) module to facilitate short-range communication. For example, the NFC module may be implemented based on radio frequency identification (RFID), infrared data association (IrDA), ultra-wideband (UWB), Bluetooth (BT), or other technologies.

In an example embodiment, UE 800 may be implemented by one or more of an application-specific integrated circuit (ASIC), a digital signal processor (DSP), a digital signal processing device (DSPD), a programmable logic device (PLD), a field-programmable gate array (FPGA), a controller, a microcontroller, a microprocessor, or other electronic components to perform the aforementioned information processing method.

In an example embodiment, a non-transitory computer-readable storage medium including instructions is also provided, such as memory 804 including instructions. These instructions may be executed by processor 820 of UE 800 to generate the aforementioned information processing method. For example, the non-transitory computer-readable storage medium may be ROM, random access memory (RAM), CD-ROM, magnetic tape, floppy disk, or optical data storage device, etc.

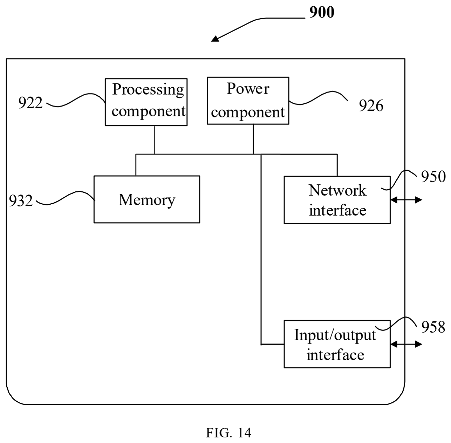

As shown in FIG. 14, an embodiment of the present disclosure illustrates a structure of a communications device. For example, the communications device 900 may be provided as a network device. The communications device may be an access network device, such as a base station.

Referring to FIG. 14, the communications device 900 includes a processing component 922, which further includes one or more processors, and a memory resource represented by a memory 932 for storing instructions, such as application programs, that are executable by the processing component 922. The application programs stored in memory 932 may include one or more modules, each corresponding to a set of instructions. Furthermore, the processing component 922 is configured to execute instructions to perform any of the aforementioned methods applied to the network device, such as the information processing method shown in any of FIG. 3 to FIG. 10.

The communication device 900 may further include a power component 926 configured to perform power management for the communication device 900, a wired or wireless network interface 950 configured to connect the communication device 900 to a network, and an input/output (I/O) interface 958. The communication device 900 may operate based on an operating system stored in the memory 932, such as Windows Server^{™}, Mac OS X^{™}, Unix^{™}, Linux^{™}, FreeBSD^{™}, or the like.

Unless otherwise specified, each step in an embodiment or example can be implemented as an independent embodiment, and the steps can be combined arbitrarily. For example, a solution with some steps removed from an embodiment or example can also be implemented as an independent embodiment, and the order of the steps in an embodiment or example can be interchanged. In addition, the alternatives or alternative examples in an embodiment or example can be combined arbitrarily. Furthermore, the embodiments or examples can be combined arbitrarily. For example, some or all steps from different embodiments or examples can be combined arbitrarily, and one embodiment or example can be combined arbitrarily with the alternatives or alternative examples of other embodiments or examples.

Those skilled in the art will readily recognize other embodiments of the present invention after considering the specification and practicing the present disclosure. The present disclosure is intended to cover any variations, uses, or adaptations of the invention that follow the general principles of the present disclosure and include common knowledge or customary techniques in the art not disclosed herein. The description and examples are to be considered as exemplary only, with the true scope and spirit of the disclosure being indicated by the following claims.

It should be understood that the present disclosure is not limited to the precise configuration described above and illustrated in the drawings, and that various modifications and variations are possible without departing from its scope. The scope of the present disclosure is limited only by the accompanying claims.

## Claims

1. An information processing method, performed by a terminal, comprising:
sending transmit power information to a network device; wherein the transmit power information is configured to determine a transmit power difference between a transmit power of a target antenna in diversity antennas of the terminal and a transmit power of a primary antenna of the terminal; and the transmit power difference is used by the network device to compensate for a deviation in a channel estimation for a sounding reference signal SRS associated with the target antenna when the terminal transmits the SRS using the target antenna.

2. The method according to claim 1, wherein the transmit power comprises at least one of:
a configured maximum output power; or
a power headroom.

3. The method according to claim 1 or 2, wherein:
the transmit power information comprises transmit power information of the target antenna and transmit power information of the primary antenna; or
in a case where the transmit power information of the primary antenna has been sent to the network device by the terminal, the transmit power information comprises the transmit power information of the target antenna; or
the transmit power information comprises the transmit power difference.

4. The method according to any one of claims 1 to 3, wherein sending the transmit power information to the network device comprises:
sending a power headroom report to the network device; wherein the power headroom report comprises the transmit power information.

5. The method according to claim 4, wherein sending the power headroom report to the network device comprises:
sending the power headroom report to the network device when an SRS antenna is switched to the target antenna.

6. The method according to claim 5, wherein sending the power headroom report to the network device when the SRS antenna is switched to the target antenna comprises at least one of:
when the SRS antenna is switched to the target antenna and a difference between an insert loss of the target antenna and an insert loss of the primary antenna is greater than a first threshold, sending the power headroom report to the network device;
when the SRS antenna is switched to the target antenna and the transmit power difference is greater than a second threshold, sending the power headroom report to the network device; or
when the SRS antenna is switched to the target antenna and a sum of a first difference and a second difference is greater than a third threshold, sending the power headroom report to the network device; wherein the first difference is the difference between the insert loss of the target antenna and the insert loss of the primary antenna; and the second difference is a difference between a power management maximum output power reduction P-MPR of the target antenna and a P-MPR of the primary antenna.

7. The method according to claim 6, wherein at least one of the first threshold, the second threshold, and the third threshold is pre-set by the terminal or determined by the terminal based on configuration information from the network device.

8. The method according to claim 7, wherein the configuration information is configuration information for an SRS resource set.

9. The method according to claim 7 or 8, further comprising:
receiving the configuration information sent by the network device based on capability information of the terminal; wherein the capability information of the terminal indicates an SRS antenna switching capability supported by the terminal.

10. The method according to any one of claims 5 to 9, further comprising:
receiving indication information from the network device, wherein the indication information is configured to determine whether the terminal is allowed to send the power headroom report to the network device when the SRS antenna is switched.

11. The method according to claim 1 or 2, wherein sending the transmit power information to the network device comprises:
sending capability information of the terminal to the network device; wherein the capability information of the terminal indicates an SRS antenna switching capability supported by the terminal; and the capability information of the terminal comprises the transmit power information of the diversity antennas and the primary antenna of the terminal.

12. An information processing method, performed by a network device, comprising:
receiving transmit power information sent by a terminal; wherein the transmit power information is configured to determine a transmit power difference between a transmit power of a target antenna in diversity antennas of the terminal and a transmit power of a primary antenna of the terminal; wherein the transmit power difference is used by the network device to compensate for a deviation in a channel estimation for a sounding reference signal SRS associated with the target antenna when the terminal transmits the SRS using the target antenna.

13. The method according to claim 12, wherein the transmit power comprises at least one of:
a configured maximum output power; or
a power headroom.

14. The method according to claim 12 or 13, wherein:
the transmit power information comprises transmit power information of the target antenna and transmit power information of the primary antenna; or
in a case where the transmit power information of the primary antenna has been sent by the terminal to the network device, the transmit power information comprises the transmit power information of the target antenna; or
the transmit power information comprises the transmit power difference.

15. The method according to claim 14, wherein receiving the transmit power information sent by the terminal comprises:
receiving a power headroom report sent by the terminal; wherein the power headroom report comprises the transmit power information.

16. The method according to claim 14 or 15, wherein receiving the power headroom report sent by the terminal comprises:
receiving the power headroom report sent by the terminal when an SRS antenna is switched to the target antenna.

17. The method according to claim 16, wherein
the power headroom report is sent by the terminal to the network device when the SRS antenna is switched to the target antenna and a difference between an insert loss of the target antenna and an insert loss of the primary antenna is greater than a first threshold; and/or
the power headroom report is sent by the terminal to the network device when the SRS antenna is switched to the target antenna and the transmit power difference is greater than a second threshold; and/or
the power headroom report is sent by the terminal to the network device when the SRS antenna is switched to the target antenna and a sum of a first difference and a second difference is greater than a third threshold; wherein the first difference is the difference between the insert loss of the target antenna and the insert loss of the primary antenna; and the second difference is a difference between a power management maximum output power reduction P-MPR of the target antenna and a P-MPR of the primary antenna.

18. The method according to claim 17, wherein at least one of the first threshold, the second threshold, and the third threshold is pre-set by the terminal or determined by the terminal based on configuration information from the network device.

19. The method according to claim 18, wherein the configuration information is configuration information of an SRS resource set.

20. The method according to claim 18 or 19, further comprising:
sending the configuration information to the terminal based on capability information of the terminal; wherein the capability information of the terminal indicates an SRS antenna switching capability supported by the terminal.

21. The method according to any one of claims 16 to 20, further comprising:
sending indication information to the terminal, wherein the indication information is configured to determine whether the terminal is allowed to send the power headroom report to the network device when the SRS antenna is switched.

22. The method according to claim 12 or 13, wherein receiving the transmit power information sent by the terminal comprises:
receiving capability information of the terminal; wherein the capability information of the terminal indicates an SRS antenna switching capability supported by the terminal; and wherein the capability information of the terminal comprises transmit power information of the diversity antennas and the primary antenna of the terminal.

23. An information processing device, applied to a terminal, comprising:
a sending module configured to send transmit power information to a network device; wherein the transmit power information is configured to determine a transmit power difference between a transmit power of a target antenna in diversity antennas of the terminal and a transmit power of a primary antenna of the terminal; and the transmit power difference is used by the network device to compensate for a deviation in a channel estimation for a sounding reference signal SRS associated with the target antenna when the terminal transmits the SRS using the target antenna.

24. An information processing device, applied to a network device, comprising:
a receiving module configured to receive transmit power information sent by a terminal; wherein the transmit power information is configured to determine a transmit power difference between a transmit power of a target antenna in diversity antennas of the terminal and a transmit power of a primary antenna of the terminal; wherein the transmit power difference is used by the network device to compensate for a deviation in a channel estimation for a sounding reference signal SRS associated with the target antenna when the terminal transmits the SRS using the target antenna.

25. A communication system, comprising:
a terminal configured to perform the information processing method according to any one of claims 1 to 11; and
a network device configured to perform the information processing method according to any one of claims 12 to 22.

26. A communication device, comprising:
a processor; and
a memory for storing instructions executable by the processor;
wherein the processor is configured to, when executing the executable instructions, perform the information processing method according to any one of claims 1 to 11 or claims 12 to 22.

27. A computer storage medium, wherein the computer storage medium stores a computer executable program, and when the executable program is executed by a processor, the processor performs the information processing method according to any one of claims 1 to 11 or claims 12 to 22.
